# Europäisches Patentamt
## European Patent Office
### Office européen des brevets

(19)

(11) Veröffentlichungsnummer: **0 186 093 B1**

(12) **EUROPÄISCHE PATENTSCHRIFT**

(45) Veröffentlichungstag der Patentschrift:
**19.11.87**

(51) Int. Cl.⁴: **B 65 G 69/00**

(21) Anmeldenummer: **85116050.7**

(22) Anmeldetag: **17.12.85**

(54) Verformbare Dichtung des Spaltes zwischen dem Rand einer Gebäudeöffnung und dem Heck eines Fahrzeuges.

(30) Priorität: **27.12.84 DE 3447543**

(43) Veröffentlichungstag der Anmeldung:
**02.07.86 Patentblatt 86/27**

(45) Bekanntmachung des Hinweises auf die Patenterteilung:
**19.11.87 Patentblatt 87/47**

(84) Benannte Vertragsstaaten:
**AT BE CH DE FR GB IT LI LU NL SE**

(56) Entgegenhaltungen:
**US - A - 3 538 655**
**US - A - 4 062 157**
**US - A - 4 070 801**

(73) Patentinhaber: **Alten, Kurt, Ringstrasse 14, D-3015 Wennigsen (DE)**

(72) Erfinder: **Alten, Kurt, Ringstrasse 14, D-3015 Wennigsen (DE)**

(74) Vertreter: **Depmeyer, Lothar, Auf der Höchte 30, D-3008 Garbsen 1 (DE)**

## Beschreibung

Die Erfindung betrifft Dichtungen nach dem Gattungsbegriff des 1. Patentanspruches (bekannt aus US-A-3538655).

Bei diesen Dichtungen ergibt sich deshalb ein Mangel, weil die zu beiden Seiten der Gebäudeöffnung befindlichen Schürzen wohl eine Abdichtung zum Fahrzeug hin, nicht jedoch nach unten bewirken. Dadurch können gewisse Wärmeverluste und schlechthin Witterungseinflüsse eintreten. Hinzu kommt, dass die Schürzen gerade im Bereich ihres unteren Endes leicht und vielleicht auch bleibend verformt werden können, wenn ein Fahrzeug unsachgemäss an die Dichtung herangefahren wird.

Aufgrund der Erfindung sollen diese Nachteile vermieden werden; es soll eine bessere Abdichtung und zugleich erreicht werden, dass die Verformungen im unteren Endbereich der Schürze nicht zu Schäden führen können.

Dieses Ziel wird aufgrund der Erfindung durch ein frei pendelnd aufgehängtes, durch die Schürzen beim Einbiegen elastisch verformbares Widerlager erzielt, das sich im Bereich des unteren Schürzenendes befindet. Die Aufhängung des Widerlagers kann dabei elastisch nachgiebig und zweckmässigerweise auch verstellbar ausgeführt werden.

Für diese Widerlager wird vorzugsweise ein elastischer Schaumstoffkörper benutzt, der sich in einer Hülle befindet und somit unter der Einwirkung der zurückgebogenen Schürze leicht verformt werden kann.

Ein so ausgebildetes Widerlager kann sich aufgrund seiner pendelnden Aufhängung weitgehend den Verformungen der Schürze anpassen bzw. sich auf diese einstellen. Ausserdem ist diese Halterung des Widerlagers technisch sehr einfach, also mit einfachen Mitteln auszuführen. Die gute Verformbarkeit hat auch zur Folge, dass das Widerlager sich bereitwillig immer in den Bereich hineinverformen kann, der noch eine Ausweichmöglichkeit des Widerlagers gestattet. Daher kann aufgrund des erfindungsgemässen Widerlagers nahezu der gesamte freie Querschnitt ausgefüllt werden, der durch die verformte Schürze und die benachbarten, feststehenden, sich nicht verformenden Teile des Gebäudes und/oder der Dichtung bestimmt ist. Aus diesem Grunde wird auch eine Verbesserung der Abdichtung erreicht.

Weitere Einzelheiten der Neuerung werden anhand der Zeichnung erläutert, in der ein Ausführungsbeispiel der Erfindung dargestellt ist. Es zeigen:

Fig. 1 eine verformbare Dichtung des Spaltes zwischen dem Rand einer Gebäudeöffnung und dem Heck eines Fahrzeuges, das über die Gebäudeöffnung entladen oder beladen werden soll, in der Zeichnung aber nicht dargestellt ist,

Fig. 2 einen Schnitt nach der Linie II-II von Fig. 1 und

Fig. 3 einzelne Merkmale der Aufhängung des Widerlagers in der Ansicht.

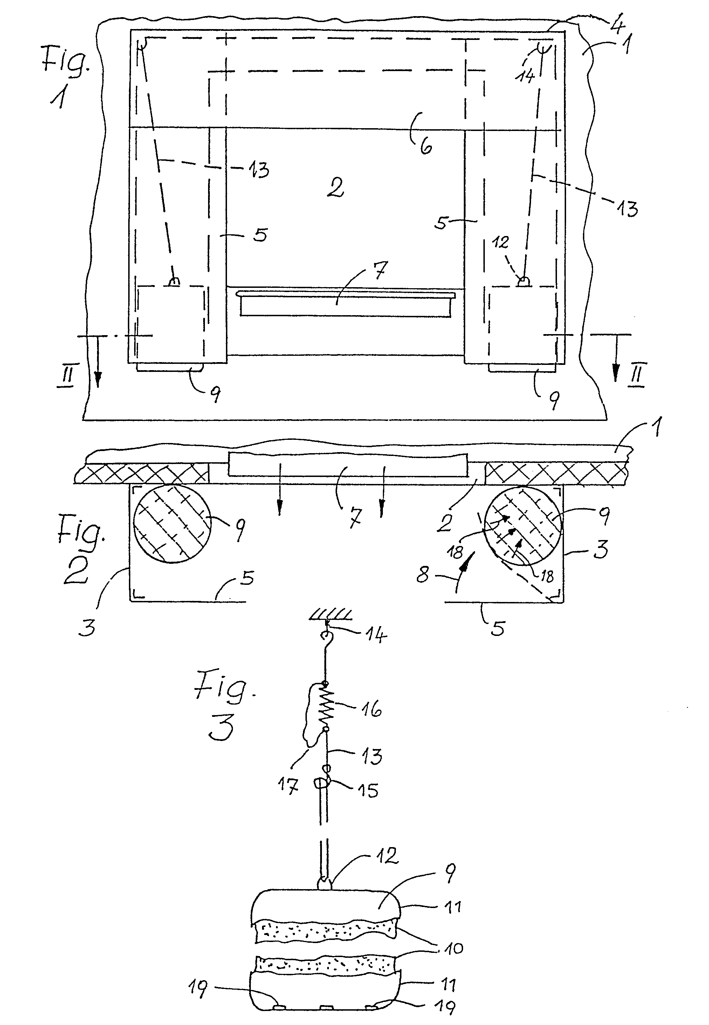

Das Gebäude 1 hat eine Öffnung 2, an die Fahrzeuge mit dem Heck voran zum Be- und Entladen herangefahren werden. Zu beiden Seiten der Öffnung 2 befindet sich eine senkrecht verlaufende Bespannung 3 und darüber in waagerechter Anordnung eine Querbespannung 4. Diese Bespannungen stellen vom Gebäude 1 eine Verbindung her zu einer senkrechten Schürze 5 zu beiden Seiten der Öffnung 2 und einem waagerechten oberen Schürzenabschnitt 6. Die Teile 3-6 bestehen aus einer wasserdichten, biegsamen Folie z.B. einem dünnen, gummierten Gewebe. In der Öffnung 2 befindet sich noch eine schwenkbare Überladebrücke 7, deren Vorderteil aus- und einfahrbar ist, welches auf die zu be- bzw. entladende Plattform gelegt wird.

Es versteht sich, dass das Heck des Fahrzeuges gegenüber dem Gebäude 1 bzw. dem Rand der Öffnung 2 gut abgedichtet werden muss, um Wärmeverluste zu vermeiden. Die Abdichtung kommt dabei durch die Verformung der Schürze 5 bzw. des Schürzenabschnittes 6 zustande; diese Teile schmiegen sich an das Heck des Fahrzeuges an, wobei die Schürzen 5 nach innen abgebogen werden, wie dies durch den Pfeil 8 angedeutet ist.

Um unter diesen Voraussetzungen freie Durchtrittsöffnungen auszuschalten, ist aufgrund der Erfindung ein elastisch verformbares Widerlager 9 vorgesehen, das aus einem weich eingestellten Schaum 10 mit einer beutelartigen Umhüllung 11 besteht. Oben an der Umhüllung befindet sich eine Öse 12 zum Einziehen eines Seiles 13, dessen oberes Ende im Bereich der Querbespannung 4 mittels Haken 14 befestigt ist.

Die effektive Seillänge kann dabei durch ein Schloss 15 verändert werden. In den Seilzug ist ferner eine Zugfeder 16 eingeschaltet, der jedoch eine Dehnungsbegrenzung 17 zugeordnet ist, welche die Last aufnimmt, wenn die Zugfeder 16 eine bestimmte Dehnung erfahren hat.

Demgemäss ist das Widerlager 9 frei pendelnd aufgehängt; es kann sich also auf die Verformung im unteren Abschnitt der Schürze 5 einstellen und dabei dichtend in die freien Räume zwischen Schürze 5, Bespannung 3 und Gebäude 1 eindringen, was durch die Einwirkung der verformten Schürze 5 geschieht, und zwar im Sinne der Pfeile 18.

Um eine gute Verformung des Widerlagers 9 sicherzustellen, hat die Umhüllung 11 unten Durchtrittsöffnungen 19 für den Ein- und Austritt von Luft.

Wichtig ist noch, dass die Aufhängung des Widerlagers 9 derart schräg erfolgt, dass sich dieses allein aufgrund seiner Aufhängung in die Ecke legt, die durch die Bespannung 3 und das Gebäude 1 bestimmt ist. Das Seil 13 ist aus diesen Gründen schräg nach hinten oben geführt, und zwar dorthin, wo das Gebäude 1 und die Bespannung 3 zusammenstossen.

## Patentansprüche

1. Verformbare Dichtung des Spaltes zwischen dem Rand einer Gebäudeöffnung (2) und dem Heck eines an diese herangefahrenen Fahrzeuges mit zu beiden Seiten der Gebäudeöffnung befindlichen, etwa senkrecht verlaufenden Schürzen (5), die seitlich aussen befestigt sind und deren einander zugekehrte Ränder durch das Fahrzeug in Richtung auf das Gebäude abbiegbar sind, gekennzeichnet durch ein pendelnd aufgehängtes, durch die Schürzen beim Abbiegen elastisch verformbares Widerlager (9), das im Bereich des unteren Endes der Schürzen (5) angeordnet ist.

2. Dichtung nach Anspruch 1, dadurch gekennzeichnet, dass die Aufhängung des Widerlagers (9) gegen die Wirkung einer Rückstellkraft (Zugfeder 16) verlängerbar ist.

3. Dichtung nach Anspruch 1 und 2, dadurch gekennzeichnet, dass der Zugfeder (16) eine Dehnungsbegrenzung (17) zugeordnet ist.

4. Dichtung nach Anspruch 1, dadurch gekennzeichnet, dass die Länge der Aufhängung (13) verstellbar ist.

5. Dichtung nach Anspruch 1, dadurch gekennzeichnet, dass das Widerlager (9) aus einem weich eingestellten Schaum od. dgl. besteht, der sich in einer beutelartigen Umhüllung (11) befindet.

6. Dichtung nach Anspruch 5, dadurch gekennzeichnet, dass die Umhüllung, vorzugsweise an ihrer Unterseite, Luftdurchtrittsöffnungen aufweist.

7. Dichtung nach Anspruch 1, dadurch gekennzeichnet, dass das Widerlager (9) derart exzentrisch aufgehängt oder mit einer schräg verlaufenden Aufhängung versehen ist, dass es sich unter seinem Eigengewicht gegen das Gebäude (1) und die senkrecht dazu verlaufenden Teile (Bespannung 3 als Verbindung zwischen dem Gebäude und der Schürze) anlegt.

8. Dichtung nach Anspruch 1, dadurch gekennzeichnet, dass das Widerlager (9) im wesentlichen die Gestalt eines aufrecht stehenden Zylinders hat.

## Claims

1. Deformable means for sealing the gap between the edge of an opening (2) in a building and the rear end of a vehicle which has been driven up to the opening, comprising substantially vertically extending aprons (5) which are disposed on both sides of the opening in the building and are secured laterally outwardly, and the edges of the aprons facing one another are deflectable in the direction of the building by means of the vehicle, characterised by a pivotally mounted abutment member (9) which is resiliently deformable by means of the aprons during the deflection process and which is disposed in the region of the lower end of the aprons (5).

2. Sealing means according to claim 1, characterised in that the mounting for the abutment member (9) is extensible in opposition to the action of a restoring force (tension spring 16).

3. Sealing means according to claims 1 and 2, characterised in that the tension spring (16) has an expansion limiting means (17) associated therewith.

4. Sealing means according to claim 1, characterised in that the length of the mounting (13) is adjustable.

5. Sealing means according to claim 1, characterised in that the abutment member (9) is formed from a soft-set foam or the like which is dispose in a bag-like cover (11).

6. Sealing means according to claim 5, characterised in that the cover has air-inlet apertures, preferably in its underside.

7. Sealing means according to claim 1, characterised in that the abutment member (9) is so eccentrically mounted, or is provided with such an inclinedly extending mounting, that it abuts, due to its own weight, against the building (1) and against the members extending vertically thereto (covering member 3 serving as the connection between the building and the apron).

8. Sealing means according to claim 1, characterised in that the abutment member (9) is substantially in the form of a vertically disposed cylinder.

## Revendications

1. Dispositif pour rendre étanche l'intervalle compris entre le bord d'une baie (2) d'un bâtiment et l'arrière d'un véhicule qui en est approché, comprenant des jupes (5) à peu près verticales qui se trouvent des deux côtés de la baie, qui sont fixées latéralement à l'extérieur et dont les bords tournés l'un vers l'autre peuvent être écartés par le véhicule dans la direction du bâtiment, caractérisé par une butée (9) qui est suspendue à la manière d'un pendule, qui est déformable élastiquement par les jupes lors de l'écartement et qui est disposée dans la région de l'extrémité inférieure des jupes (5).

2. Dispositif suivant la revendication 1, caractérisé en ce que la suspension de la butée (9) peut être allongée à l'encontre de l'effet d'une force de rappel (ressort de traction 16).

3. Dispositif suivant la revendication 1 ou 2, caractérisé en ce qu'au ressort de traction (16) est associé un dispositif de limitation de l'allongement (17).

4. Dispositif suivant la revendication 1, caractérisé en ce que la longueur de la suspension (13) est réglable.

5. Dispositif suivant la revendication 1, caractérisé en ce que la butée (9) est constituée d'une mousse ou analogue non rigide qui se trouve dans une enveloppe (11) en forme de sac.

6. Dispositif suivant la revendication 5, caractérisé en ce que l'enveloppe comporte de préférence du côté inférieur des ouïes de passage de l'air.

7. Dispositif suivant la revendication 1, caractérisé en ce que la butée (9) est suspendue de manière excentrée ou est munie d'une suspension s'étendant en oblique de manière à s'appliquer sous son propre poids contre le bâtiment (1) et les parties (entoilage 3 servant de liaison entre le bâtiment et la jupe) s'étendant perpendiculairement à celui-ci.

8. Dispositif suivant la revendication 1, caractérisé en ce que la butée (9) affecte essentiellement la forme d'un cylindre vertical.

Fig. 1

Fig. 2

Fig. 3